# FASCICULE DE BREVET EUROPEEN

(11) **EP 2 303 427 B1**
(45) Date de publication et mention de la délivrance du brevet: **04.01.2012**
(21) Numéro de dépôt: 09784515.0
(22) Date de dépôt: 10.07.2009
(51) Int. Cl.: B01D 39/20

(54) **FILTRE A PARTICULES A MEDIA FILTRANT MINERAL**
PARTIKELFILTER MIT MINERALISCHEN FILTERMEDIEN
PARTICULATE FILTER HAVING MINERAL FILTER MEDIA

(30) Priorité: 15.07.2008 FR 0854805
(43) Date de publication de la demande: 06.04.2011
(73) Titulaire: Saint-Gobain Quartz S.A.S., 92400 Courbevoie (FR)
(72) Inventeur: MOLINS, Laurent, F-77460 Souppes Sur Loing (FR)
(74) Mandataire: Colombier, Christian
(86) Numéro de dépôt international: PCT/FR2009/051393
(87) Numéro de publication internationale: WO 2010/007304

(56) Documents cités:
- EP-A- 0 931 579
- WO-A-96/29201
- DE-A1-102004 027 354
- FR-A- 2 773 821

## Description

L'invention concerne le domaine des filtres à particules.

Les filtres à particules comprennent un média-filtrant dont le rôle est de retenir les particules dont une atmosphère est chargée. Il s'agit de purifier l'atmosphère des locaux de toute nature, à usage d'habitation ou à usage professionnel comme les bureaux, ateliers, usines, hangars, etc, dans un soucis de mieux préserver la santé de ses occupants et/ou de mieux protéger une activité s'accommodant difficilement de la présence de poussières. Pour ce faire, on entraîne en un flux forcé l'atmosphère à purifier à l'aide d'un ventilateur au travers d'un filtre à particules.

Un filtre à particules comprend une cassette (c'est le boîtier définissant l'enveloppe externe du filtre) et un média filtrant. Le premier média-filtrant (qui peut être le seul dans la cassette) sur le chemin de l'air venant de l'extérieur du filtre est souvent appelé « pré-filtre », son rôle étant toujours de retenir les particules solides ou liquide en suspension dans l'air. Il est placé en première position dans la cassette, c'est-à-dire qu'il reçoit directement l'air ambiant venant de l'extérieur du filtre sans que l'air ne passe par un autre média-filtrant avant lui. Dans le cadre de la présente demande, on appelle cette première position par rapport à l'air entrant « position de pré-filtrage ». La cassette peut comprendre d'autres média-filtrant (sur le chemin du gaz à purifier) derrière ce premier-média-filtrant en position de pré-filtrage. Le média-filtrant pour piéger les particules (en position de pré-filtrage ou derrière lui) peut être un ou plusieurs média-filtrant comme ceux habituellement désignés sous G1, G2, G3, G4, F5, HEPA, ULPA. On peut en effet avoir dans la cassette une succession de média-filtrants dont la sélectivité croit par rapport aux tailles de particules arrêtées. Le (ou les) média-filtrant peut également être suivi d'un média-filtrant à action photocatalytique. Le pré-filtre (ou premier média-filtrant) est généralement placé derrière une grille (généralement en métal) qui n'est pas considérée comme étant un média-filtrant. Cette grille laisse généralement passer de la lumière venant de l'extérieur du filtre directement vers le pré-filtre.

De nombreux médias filtrants existent sur le marché. Ils sont jusqu'à présent constitués de fibres organiques ou minérales liées par un liant organique. On a maintenant constaté que la matière organique contenue dans le média-filtrant tend à se faire attaquer par le ou les gaz oxydants comme l'ozone contenu dans l'air qui le traverse. Cette attaque (réaction d'oxydation) conduit à la formation de composés organovolatils (souvent désignés par « COV » en français ou « VOC » en anglais) plus ou moins toxiques comme par exemple le formaldéhyde. Les matières organiques contenues dans un média filtrant de filtre est de ce fait source de COV, et ce d'autant plus que le flux forcé qui le parcourt renouvelle en permanence le gaz oxydant (comme l'ozone) à son contact. Le media-filtrant est donc une source de COV plus importante lorsque le ventilateur (ou la turbine) convoyant l'air au travers du filtre est en fonctionnement que lorsqu'il est à l'arrêt. De plus, par nature, la surface du média-filtrant n'est pas négligeable ce qui est favorable à une attaque importante par le gaz oxydant contenu dans l'air. En résolvant un problème d'élimination de particules dans l'atmosphère, on en a créé un autre par la formation de COV dans la même atmosphère. Lorsque la cassette du filtre contient par ailleurs un filtre à action photocatalytique (derrière le ou les média-filtrants retenant les particules, sur le chemin du gaz traversant) dont le rôle est justement d'éliminer les COV de l'air entrant dans le filtre, il est particulièrement contre-productif d'enrichir l'air en COV juste avant le passage sur le filtre à action photocatalytique car l'efficacité de ce dernier pourrait s'en trouver diminuée du fait de la quantité plus forte de COV à gérer.

On a maintenant eu l'idée d'utiliser au moins comme pré-filtre un média filtrant entièrement minéral de façon à ne plus générer de COV lorsque le filtre fonctionne. Un excellent média filtrant selon l'invention est un feutre de fibres de silice (souvent appelé « quartz » et comprenant au moins 99% en poids de SiO₂) ne comprenant aucun liant organique, comme celui commercialisé sous la marque Quartzel par Saint-Gobain Quartz. Le procédé de fabrication de ce feutre produit un enchevêtrement naturel des fibres ne nécessitant aucun liant. D'autres média-filtrants sont envisageables et notamment des tissés ou non-tissés de fibres de verre dès lors qu'ils ont été débarrassés des matières organiques utilisées pour leur fabrication, soit au niveau d'un éventuel ensimage, soit au niveau d'un liant. Le liant peut notamment avoir été du type sol-gel. Ces tissés ou non-tissés peuvent avoir été liés par couture ou aiguilletage. On peut notamment débarrasser une structure fibreuse de ses matières organiques par un traitement thermique qui peut avoir eu lieu à plus de 400 °C par exemple.

Le média-filtrant placé en position de pré-filtrage est essentiellement minéral et contient moins de 0,1% en poids de matière organique, voire même moins de 0,01% en poids de matière organique, voire même aucune matière organique (c'est le cas du Quartzel). Sa perte au feu (LOI en anglais) est inférieure à 0,1%, voire inférieure à 0,01%, voire même nulle. Sa masse surfacique va généralement de 5 à 400 g/m² et plus généralement de 10 à 300 g/m². Le média-filtrant en position de pré-filtrage peut également avoir une action photocatalytique auquel cas non seulement il retient les particules, mais en plus, il élimine les COV contenus dans l'air. On sait faire un revêtement photocatalytique essentiellement minéral et pour cela, on peut se rapporter par exemple à la demande de brevet française n° 0757000 déposée le 8 août 2007. Généralement, le revêtement à action photocatalytique contient de l'oxyde de titane. Si le filtre contient un média-filtrant à action photocatalytique, alors il contient également la source d'UV (UVA, UVB, UVC, UV visibles) nécessaire à son activation (lampe UV).

Rappelons que l'on peut déterminer une perte au feu de la façon suivante : on déshydrate au préalable à 110°C (4h par exemple), puis on calcine sous air à 800°C (4 heures par exemple) et l'on mesure la perte de masse engendrée par la calcination (hors déshydratation).

De préférence, tout média-filtrant contenu dans la cassette est essentiellement minéral et répond aux mêmes exigences (quantité de matière organique et perte au feu) que le média-filtrant placé en position de pré-filtrage.

L'invention concerne également un dispositif comprenant le filtre à particules selon l'invention et un ventilateur ou une turbine pour faire passer de l'air à travers le filtre à particules. L'invention concerne également l'utilisation du dispositif selon l'invention pour purifier l'atmosphère intérieure d'un bâtiment. Notamment, le filtre selon l'invention peut être incorporé dans un épurateur d'air dont le fonctionnement fait intervenir des UV du type C, ou à action photocatalytique. En effet, les filtres arrêtant les poussières de l'art antérieur contiennent des agents collants organiques et, la dégradation de ces agents collants organiques est notable. Cette dégradation est due à l'action des UVC, des radicaux hydroxyls de la réaction photocatalytique, conjuguée éventuellement à l'action de l'ozone. Cette dégradation peut engendrer des sous-produits de type composés organo-volatiles (COV, ou VOC en anglais), notamment du type aldéhyde et formaldéhyde. L'utilisation d'un préfiltre minéral apporte une solution à ce problème. L'invention concerne également l'utilisation du filtre selon l'invention dans un purificateur d'air à action photocatalytique (contenant une matière à action photocatalytique lorsque soumise à UVC, UVB, UVA ou UV visible) ou UVC (sans matière à action photocatalytique).

## Revendications

1. Filtre à particules comprenant une cassette et un média-filtrant placé dans la cassette en position de pré-filtrage **caractérisé en ce que** le média filtrant est essentiellement minéral.

2. Filtre selon l'une des revendications précédentes, **caractérisé en ce que** le média-filtrant présente une perte au feu inférieure à 0,1% en poids.

3. Filtre selon la revendication précédente, **caractérisé en ce que** le média-filtrant présente une perte au feu inférieure à 0,01 % en poids.

4. Filtre selon l'une des revendications précédentes, **caractérisé en ce que** le média-filtrant est un feutre de fibres minérales sans liant organique.

5. Filtre selon la revendication précédente, **caractérisé en ce que** la fibre minérale est en silice.

6. Filtre selon l'une des revendications précédentes, **caractérisé en ce que** le média-filtrant est également à action photocatalytique.

7. Filtre à particules selon l'une des revendications précédentes, **caractérisé en ce que** le média-filtrant est suivi sur le chemin du gaz par un autre média-filtrant à action photocatalytique.

8. Filtre à particules selon l'une des revendications précédentes, **caractérisé en ce que** la masse surfacique du média-filtrant va de 5 à 400 g/m² et plus généralement de 10 à 300 g/m².

9. Dispositif comprenant un filtre à particules de l'une des revendications précédentes et un ventilateur ou une turbine pour faire passer de l'air à travers le filtre à particules.

10. Utilisation du dispositif de la revendication précédente pour purifier l'atmosphère intérieure d'un bâtiment.

11. Utilisation selon la revendication précédente, **caractérisé en ce que** le filtre est dans un purificateur d'air à action photocatalytique UVC, UVB, UVA ou UV visible.

12. Utilisation selon la revendication 10, **caractérisé en ce que** le filtre est dans un purificateur d'air UVC.

## Claims

1. A particulate filter comprising a cartridge and a filter media placed in the cartridge in the prefiltering position, **characterized in that** the filter media is essentially mineral.

2. The filter as claimed in one of the preceding claims, **characterized in that** the filter media has a loss on ignition of less than 0.1 % by weight.

3. The filter as claimed in the preceding claim, **characterized in that** the filter media has a loss on ignition of less than 0.01% by weight.

4. The filter as claimed in one of the preceding claims, **characterized in that** the filter media is a felt of mineral fibers containing no organic binder.

5. The filter as claimed in the preceding claim, **characterized in that** the mineral fibers are silica fibers.

6. The filter as claimed in one of the preceding claims, **characterized in that** the filter media also has a photocatalytic action.

7. The particulate filter as claimed in one of the preceding claims, **characterized in that** the filter media is followed along the path of the gas by another filter media having a photocatalytic action.

8. The particulate filter as claimed in one of the preceding claims, **characterized in that** the mass per unit area of the filter media ranges from 5 to 400 g/m² and more generally from 10 to 300 g/m².

9. A device comprising a particulate filter as claimed in one of the preceding claims and a fan or turbine for forcing the air to pass through the particulate filter.

10. The use of the device of the preceding claim for purifying the internal atmosphere of a building.

11. The use as claimed in the preceding claim, **characterized in that** the filter is in an air purifier having a UVC, UVB, UVA or visible UV photocatalytic action.

12. The use as claimed in claim 10, **characterized in that** the filter is in a UVC air purifier.

## Patentansprüche

1. Partikelfilter, umfassend eine Kassette und ein Filtrationsmittel, das in der Kassette in Vorfiltrationsposition angeordnet ist, **dadurch gekennzeichnet, dass** das Filtrationsmittel im Wesentlichen mineralisch ist.

2. Filter nach einem der vorstehenden Ansprüche, **dadurch gekennzeichnet, dass** das Filtrationsmittel einen Glühverlust von weniger als 0,1 Gew.-% aufweist.

3. Filter nach dem vorstehenden Anspruch, **dadurch gekennzeichnet, dass** das Filtrationsmittel einen Glühverlust von weniger als 0,01 Gew.-% aufweist.

4. Filter nach einem der vorstehenden Ansprüche, **dadurch gekennzeichnet, dass** das Filtrationsmittel ein Filz aus mineralischen Fasern ohne organisches Bindemittel ist.

5. Filter nach dem vorstehenden Anspruch, **dadurch gekennzeichnet, dass** die mineralische Faser aus Kieselerde besteht.

6. Filter nach einem der vorstehenden Ansprüche, **dadurch gekennzeichnet, dass** das Filtrationsmittel auch eine photokatalytische Wirkung aufweist.

7. Partikelfilter nach einem der vorstehenden Ansprüche, **dadurch gekennzeichnet, dass** sich an das Filtrationsmittel auf dem Weg des Gases ein weiteres Filtrationsmittel mit photokatalytischer Wirkung anschließt.

8. Partikelfilter nach einem der vorstehenden Ansprüche, **dadurch gekennzeichnet, dass** die flächenbezogene Masse des Filtrationsmittels zwischen 5 und 400 g/m² und allgemeiner zwischen 10 und 300 g/m² liegt.

9. Vorrichtung, umfassend ein Partikelfilter von einem der vorstehenden Ansprüche sowie einen Ventilator oder eine Turbine, um Luft durch das Partikelfilter strömen zu lassen.

10. Verwendung der Vorrichtung des vorstehenden Anspruchs zur Reinigung der Innenluft eines Gebäudes.

11. Verwendung nach dem vorstehenden Anspruch, **dadurch gekennzeichnet, dass** das Filter sich in einem Luftreiniger mit photokatalytischer Wirkung unter UVC, UVB, UVA oder sichtbarem UV befindet.

12. Verwendung nach Anspruch 10, **dadurch gekennzeichnet, dass** das Filter sich in einem UVC-Luftreiniger befindet.
